# EUROPEAN PATENT SPECIFICATION

(11) **EP 0 753 751 B1**
(45) Date of publication and mention of the grant of the patent: **30.05.2001**
(21) Application number: 96305145.3
(22) Date of filing: 12.07.1996
(51) Int. Cl.: G01P 3/68, B66B 5/04

(54) **Device for measuring speed of an elevator car**
Vorrichtung zur Messung der Geschwindigkeit einer Aufzugskabine
Dispositif de mesure de la vitesse d'une cabine d'ascenseur

(30) Priority: 12.07.1995 FR 9508428
(43) Date of publication of application: 15.01.1997
(73) Proprietor: OTIS ELEVATOR COMPANY, Farmington, CT 06032 (US)
(72) Inventor: Durand, Christophe, 45500 Gien (FR); Bongibault, Thierry, 45500 Gien (FR)
(74) Representative: Tomlinson, Kerry John

(56) References cited:
- FR-A- 2 601 142
- US-A- 5 222 024
- US-A- 5 349 854

## Description

The present invention concerns a device for measuring the speed of displacement of an elevator car.

Knowledge of the speed of displacement parameter of an elevator car is very important because it can be used particularly to improve the precision of stopping of the car at the different landings served.

Low cost European elevators, such as two-speed elevators and service elevators, are not generally equipped with a system for measuring speed because the system is too costly and their installation would increase the overall cost of sale of the lift.

US-A-5,349,854 discloses a speed control system in an elevator using a gear wheel mounted to the elevator cabin and cooperating with a perforated metal band provided in the hoistway.

In effect, these known systems, such as optical coders mounted on one of the axes of rotating of the installation, dynamo tachometers, accelerometers, laser measuring devices, etc., imply a significant expense and necessitate special inputs for rapid counting or analogue signals. They are therefore exclusively used in upper-range elevators provided with an electronic speed control.

The present invention seeks to remedy this disadvantage by proposing a speed measuring device of which the relatively modest cost is compatible with the quality standard of commercial elevators.

FR-A-2,601,142 discloses a device for measuring the speed of a train including a plurality of vertical flags which are opaque with respect to infra-red rays and which are mounted on the track. A light barrier is arranged on the train in such a way that it is interrupted by the flag when the train passes over a flag. The speed of the train can be calculated from the time the infra-red beam is interrupted by the flag.

The speed measuring device according to the invention comprises:
an optical fork fixed on the elevator car, said fork comprising two hollow arms disposed in a horizontal plane and housing respectively an emitter and a receiver of infra-red radiation, in a manner such that the infra-red beam crosses horizontally the space between the said arms,
a plurality of vertical flags, opaque with respect to infra-red rays, having a predetermined height h, fixed in the elevator hoistway at positions where one wishes to know the speed of displacement of the car and disposed in such a manner that they cut the infra-red beam each time the fork passes their level, the receiver giving out electrical signals which have a first logical state when the infra-red beam passes and a second logical state when the beam is cut,
and a calculating unit which receives from the receiver when positioned at each level information on the duration At during which the infra-red beam is interrupted by the flag mounted at that level, and which calculates the speed of the car by means of the formula V=h/Δt.

The flags can be constituted by plates or tapes of thin steel sheet, for example of the order of lmm, and several centimetres high. These are thus cheap commercial elements. The same applies to the optical fork which is an accessory currently sold in commerce.

A big advantage of the invention lies in the fact that one can use as the calculating unit the electronic control card with which the elevator is already equipped. The logical elements to be added to this card need not increase the manufacturing cost. Similarly, the input for the electrical signals sent by the receiver already exists in the electronic control card.

Another advantage of the invention lies in the good precision of the speed measurement.

Further, given that the measurement can be made without mechanical contact, the lifetime of the electronic fork can be several decades. The device according to the invention can thus be used in mid-range elevators.

One way of implementing the invention will now be described, by way of a non-limiting example, and with reference to the annexed drawings in which:
Fig. 1 is a perspective view of an optical fork and a flag;
Fig. 2 is a schematic view illustrating the whole of the speed measuring device according to the invention;
Fig. 3 is a flow chart showing the operations carried out by the electronic control card;
Fig. 4 is a schematic view of the mounting of the flags in the hoistway of an elevator;
Fig. 5 is a diagram representing the speed of the car as a function of time.

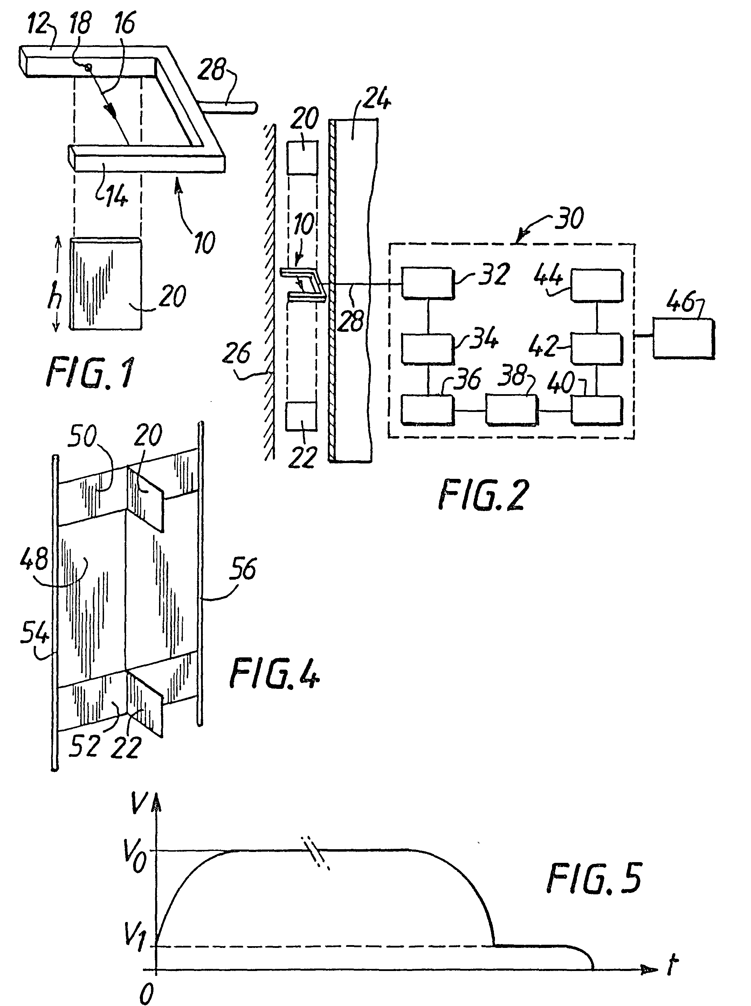

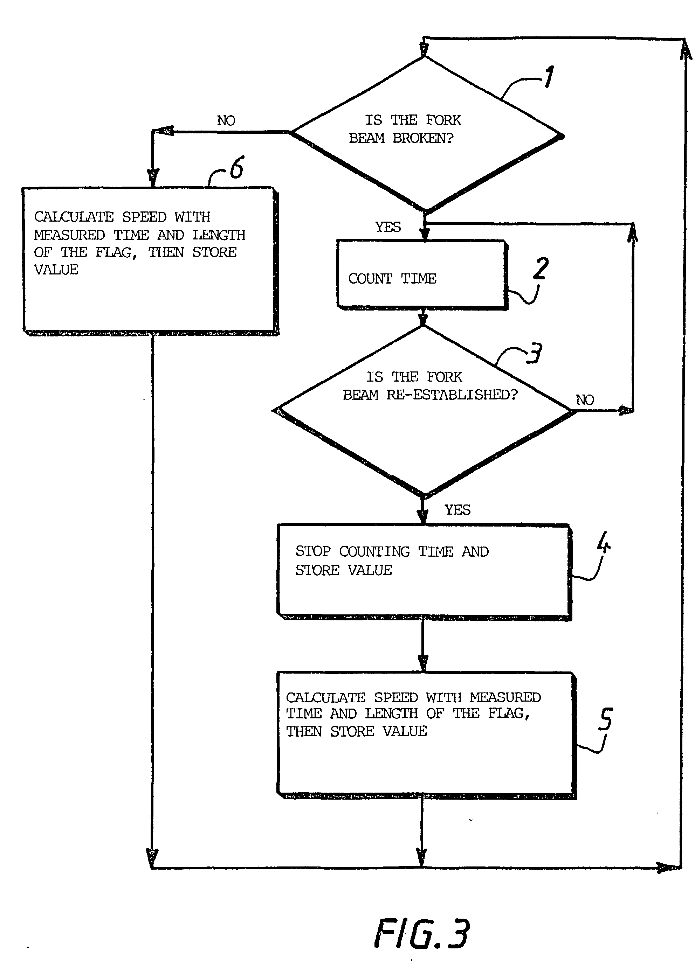

In Fig. 1 is represented an optical fork 10 in the form of a U known per se. The parallel branches 12,14 of the optical fork are hollow and house respectively an infra-red emitter and receiver, not shown. Infra-red beam 16 emitted by the emitter leaves through a hole 18, transversely crosses the space between the two branches and is received by the receiver.

The optical fork is fixed on the object of which one wishes to measure the speed of displacement, for example on an elevator cabin, and it thus moves at the same time as the object. On the path of travel of the optical fork, at the points where one wishes to measure the speed, are disposed flags 20 each comprising a plate of material opaque to infra-red, for example of sheet steel. Each flag is able to cut the infra-red beam 16 when the optical fork arrives at its level. The receiver provides at its output 28 an electrical signal having a certain logical state when the beam passes freely and another logical state when the beam is cut. According to the form of the electrical signal taken from the output of the receiver, one can thus deduce the duration At of the interruption of the beam by a flag. Knowing the height h of the flag and assuming that the speed of displacement is constant, the speed can be calculated by the formula V=h/Δt.

We refer now to Fig. 2 which illustrates the application of the device of Fig. 1 to calculating the speed of an elevator car 24.

The optical fork 10 is fixed on an exterior wall of the car, and is oriented in such a manner that its arms are in the same horizontal plane. In the hoistway 26 are fixed the plurality of flags 20,22 disposed in the same vertical plane at the different levels where one wishes to measure the speed of displacement of the car and in such a manner that they pass between the branches of the optical fork when the latter arrives at their level.

The electrical signal taken from the output of the receiver is sent via the conductor 28 to a calculating unit 30. For economic reasons this can be constituted by the electronic control card with which every elevator installation is provided. But it goes without saying that the calculating unit can equally be constituted by a specific electronic card based on a microcontroller.

The electronic control card comprises a simple static input 32 which is disposable on the card or which can be shared with another data processing device, a counter 34, a clock 36, a calculator 38, a memory 40, a program store 42 and an output 44. The information concerning the speed of displacement is displayed on a screen 46.

The flow chart of Fig. 3 illustrates the sequence of operations for calculating speed. The information received from the receiver is introduced at the input 32. The program determines at step 1 if the beam of the fork is cut. In the affirmative, the program passes to the step 2 where a counting of the duration of the cutting takes place. Then, at step 3, the program determines if the beam has been re-established. If this is not the case, the counting continues. If reestablishment of the beam is determined, the counting of time is stopped and the value of the duration of the interruption of the beam At is memorised in the step 4. Then, at the step 5, the speed is calculated from the measured duration At and the height h of the flag.

Fig. 4 shows a practical disposition of the flags 20,22 in the hoistway in relation to the landing door 48. The flags are fixed on bands 50,52 which are carried by stretched vertical cables 54,56 extending throughout the height of the hoistway. The upper flag 20 serves to measure the speed of displacement of the car when descending and is fixed slightly above the stopping zone of the car whilst the flag 22 serves to measure the speed of displacement when ascending and is fixed slightly below the stopping zone of the car. As for the optical fork, it is fixed on a wall of the car, at a height such that it is positioned between the flags 20,22 at the stop. This positioning is advantageous because it permits the electronic control card to calculate the speeds sufficiently in advance of the car arriving at the stopping zone and that enables the precision of the stop to be improved.

The diagram of Fig. 5 shows the variation of the speed of displacement of a car as a function of time, in the particular case where the car is driven by a motor-reducer with two coils, for example of 16 poles and 4 poles respectively, and has a drum brake. When, starting from the stopped state at a floor, one supplies the 16 pole coil, the car accelerates to achieve its normal speed of displacement V₀ which it maintains over practically all of its path. Shortly before the car arrives at the landing where it must stop, the supply is switched to the 4 pole coil so that cabin moves at the low constant speed V₁. The stop is achieved by cutting the supply to the motor and by releasing the jaws of the brake. The speed decelerates progressively until the car stops.

Of course the measuring of the speed must be carried out at a time when it is constant and preferably during the course of the low speed movement, because the precision of the measurement will be better in this phase.

We will now explain by the use of a particular example how to choose the height of the flag as a function of the precision which one seeks for the speed.

We suppose that the low speed is of the order of 250mm/s, that a precision of 0.5% is required and that a circuit is used having a time base of 4 ms to measure the time and to calculate the speed. In 4 ms the car travels a distance of 4.10⁻³ x 250 = lmm. This distance represents the required precision of 0.5%. It follows that the flag must have a height h such that h x 0.5/100 = lmm from which one obtains h = 200mm. With a circuit having a lower time base, one can use shorter flags.

## Claims

1. A device for measuring the speed of an elevator car, comprising:
an optical fork (10) fixed on the elevator car (24), the said fork comprising two hollow arms (12,14) disposed in a horizontal plane and housing respectively an emitter and a receiver of infra-red radiation, such that the infra-red beam (16) crosses horizontally the space between the said arms,
a plurality of vertical flags, (20,22) opaque with respect to infra-red rays, having a predetermined height h, fixed in the elevator hoistway (26) at positions where one wishes to know the speed of displacement of the car (24) and disposed in such a manner that they cut the infra-red beam (16) each time the fork (10) passes their level, the receiver giving out electrical signals which have a first logical state when the infra-red beam (16) passes and a second logical state when the beam is cut,
and a calculating unit (30) which receives from the receiver when positioned at each level information on the duration Δt during which the infra-red beam (16) is interrupted by the flag (20,22) mounted at that level, and which calculates the speed of the car (24) by means of the formula V=h/Δt.

2. A speed measuring device according to claim 1 wherein the calculating unit (30) comprises the electronic control card with which the elevator installation is normally provided.

3. A speed measuring device according to claim 1 wherein the calculating unit (30) comprises a specific electronic card based on a microcontroller.

4. A speed measuring device according to claim 1 wherein the optical fork (10) is fixed on an exterior wall of the car (24) and it is oriented in such a manner that the branches (12,14) are in the same horizontal plane, and that in the hoistway (26) are fixed a plurality of flags (20,22) disposed in a vertical plane, at the different levels where one wishes to measure the speed of displacement of the car (24) and in such a manner that they pass between the branches (12,14) of the fork (10), when the latter arrives at their level.

5. A speed measuring device according to claim 4 wherein at each floor served by the car (24) a first flag (20) is fixed above the stopping zone of the car (24) for measuring the speed of displacement when descending and a second flag (22) is .fixed below the stopping zone of the car (24) for measuring the displacement speed when ascending and in that the optical fork (10) is fixed on the wall of the car (24) at a height such that it is positioned between the flags (20,22) when the car (24) is at the stop.

6. A speed measuring device according to claim 4 wherein the flags (20,22) are fixed on supports (50,52) carried by stretched vertical cables (54,56) extending the whole height of the hoistway (26).

7. A speed measuring device according to claim 1 wherein the measure of the duration of interruption Δt of the infra-red beam (16) is carried out during a portion of She travel where the speed of displacement of the car (24) is constant.

8. A speed measuring device according to any preceding claim for an elevator car (24) driven at a high constant speed over practically all of its path and at a low constant speed for a short distance before stopping at a landing, wherein the measurement of the duration of interruption of the infra-red beam (16) is carried out when the car (24) is moving at said low constant speed.

## Patentansprüche

1. Vorrichtung zum Messen der Geschwindigkeit einer Aufzugkabine, die folgendes aufweist:
eine an der Aufzugkabine (24) angebrachte optische Gabel (10), die zwei hohle Arme (12, 14) aufweist, die in einer horizontalen Ebene angebracht sind und in denen ein Infrarotstrahlungs-Emitter bzw. ein Infrarotstrahlungs-Empfänger derart angeordnet sind, daß der Infrarotstrahl (16) den Raum zwischen den genannten Armen horizontal quert,
eine Mehrzahl vertikaler Flags (20, 22), die für Infrarotstrahlen opak sind und eine vorbestimmte Höhe h aufweisen und in dem Aufzugschacht (26) an Positionen angebracht sind, an denen man die Verlagerungsgeschwindigkeit der Kabine wissen möchte, sowie derart angeordnet sind, daß sie den Infrarotstrahl (16) jedesmal schneiden, wenn die Gabel (10) ihr Niveau durchläuft, wobei der Empfänger elektrische Signale mit einem ersten logischen Zustand abgibt, wenn der Infrarotstrahl (16) durchläuft, und elektrische Signale mit einem zweiten logischen Zustand abgibt, wenn der Strahl unterbrochen wird,
und eine Recheneinheit (30), die bei Positionierung des Empfängers auf dem jeweiligen Niveau von dem Empfänger Informationen über die Dauer At erhält, während der der Infrarotstrahl (16) von dem auf diesem Niveau angebrachten Flag (20, 22) unterbrochen wird, und die die Geschwindigkeit der Kabine (24) mittels der Formel V = h/Δt berechnet.

2. Geschwindigkeitsmeßvorrichtung nach Anspruch 1,
wobei die Recheneinheit (30) die elektronische Steuerkarte aufweist, mit der die Aufzuganlage normalerweise ausgestattet ist.

3. Geschwindigkeitsmeßvorrichtung nach Anspruch 1,
wobei die Recheneinheit (30) eine spezielle elektronische Karte aufweist, die auf einem Mikrocontroller basiert.

4. Geschwindigkeitsmeßvorrichtung nach Anspruch 1,
wobei die optische Gabel (10) an einer Außenwand der Kabine (24) angebracht ist und derart ausgerichtet ist, daß die Zweige (12, 14) in derselben horizontalen Ebene liegen, und wobei in dem Aufzugschacht (26) eine Mehrzahl von Flags (20, 22) angebracht ist, die in einer vertikalen Ebene auf verschiedenen Niveaus, wo man die Verlagerungsgeschwindigkeit der Kabine (24) messen möchte, sowie derart angeordnet sind, daß sie zwischen den Zweigen (12, 14) der Gabel (10) hindurchlaufen, wenn letztere auf ihrem Niveau ankommt.

5. Geschwindigkeitsmeßvorrichtung nach Anspruch 4,
wobei auf jedem von der Kabine (24) bedienten Stockwerk ein erstes Flag (20) über der Stoppzone der Kabine (24) zum Messen der Verlagerungsgeschwindigkeit bei der Abwärtsfahrt und ein zweites Flag (22) unter der Stoppzone der Kabine (24) zum Messen der Verlagerungsgeschwindigkeit bei der Aufwärtsfahrt angeordnet sind und wobei die optische Gabel (10) an der Wand der Kabine (24) auf einer derartigen Höhe angebracht ist, daß sie zwischen den Flags (20, 22) positioniert ist, wenn sich die Kabine (24) an dem Stopp befindet.

6. Geschwindigkeitsmeßvorrichtung nach Anspruch 4,
wobei die Flags (20, 22) an Halterungen (50, 52) angebracht sind, die von gespannten vertikalen Seilen (54, 56) getragen sind, die sich über die gesamte Höhe des Aufzugschachts (26) erstrecken.

7. Geschwindigkeitsmeßvorrichtung nach Anspruch 1,
wobei die Messung der Unterbrechungsdauer Δt des Infrarotstrahls (16) während eines Teils der Bewegung durchgeführt wird, in dem die Verlagerungsgeschwindigkeit der Kabine (24) konstant ist.

8. Geschwindigkeitsmeßvorrichtung nach einem der vorausgehenden Ansprüche für eine Aufzugkabine (24), die mit einer hohen konstanten Geschwindigkeit über praktisch ihre gesamte Strecke und mit einer niedrigen konstanten Geschwindigkeit über eine kurze Distanz vor dem Stoppen auf einem Stockwerk angetrieben wird, wobei die Messung der Unterbrechungsdauer des Infrarotstrahls (16) durchgeführt wird, während sich die Kabine (24) mit der niedrigen konstanten Geschwindigkeit bewegt.

## Revendications

1. Dispositif de mesure de la vitesse d'une cabine d'ascenseur, comprenant :
une fourche optique (10) fixée sur la cabine (24) d'ascenseur, ladite fourche comprenant deux bras creux (12, 14) disposés dans un plan horizontal et renfermant respectivement un émetteur et un récepteur de rayonnement infrarouge, de sorte que le faisceau infrarouge (16) traverse horizontalement l'espace entre lesdits bras,
une pluralité de repères verticaux (20, 22) opaques aux rayons infrarouges, présentant une hauteur h prédéterminée, fixés dans la cage (26) d'ascenseur en des positions où l'on souhaite connaître la vitesse de déplacement de la cabine (24), et disposés de manière à ce qu'ils coupent le faisceau infrarouge (16) chaque fois que la fourche (10) passe à leur niveau, le récepteur fournissant des signaux électriques ayant un premier état logique lorsque le faisceau infrarouge (16) passe et un deuxième état logique lorsque le faisceau infrarouge est coupé,
et une unité de calcul (30) qui reçoit du récepteur, lorsqu'elle est positionnée à chaque niveau, des informations relatives à la durée Δt pendant laquelle le faisceau infrarouge (16) est interrompu par le repère (20, 22) monté à ce niveau, et qui calcule la vitesse de la cabine (24) au moyen de la formule V = h/ Δt.

2. Dispositif de mesure de la vitesse selon la revendication 1, dans lequel l'unité de calcul (30) comprend la carte de commande électronique accompagnant normalement l'installation de l'ascenseur.

3. Dispositif de mesure de la vitesse selon la revendication 1, dans lequel l'unité de calcul (30) comprend une carte électronique spécifique basée sur un microrégisseur.

4. Dispositif de mesure de la vitesse selon la revendication 1, dans lequel la fourche optique (10) est fixée sur une paroi extérieure de la cabine (24) et est orientée de manière à ce que les branches (12, 14) occupent le même plan horizontal, et, dans la cage (26), sont fixés une pluralité de repères (20, 22) disposés dans un plan vertical, aux différents niveaux où l'on souhaite mesurer la vitesse de déplacement de la cabine (24) et de manière à ce qu'ils passent entre les branches (12, 14) de la fourche (10) lorsque cette dernière arrive à leur niveau.

5. Dispositif de mesure de la vitesse selon la revendication 4, dans lequel, à chaque étage desservi par la cabine (24), un premier repère (20) est fixé au-dessus de la zone d'arrêt de la cabine (24) en vue de mesurer la vitesse de déplacement en descente, et un deuxième repère (22) est fixé en dessous de la zone d'arrêt de la cabine (24) en vue de mesurer la vitesse de déplacement en montée, et la fourche optique (10) est fixée sur la paroi de la cabine (24) à une hauteur telle qu'elle est positionnée entre les repères (20, 22) lorsque la cabine (24) est à l'arrêt.

6. Dispositif de mesure de la vitesse selon la revendication 4, dans lequel les repères (20, 22) sont fixés sur des supports (50, 52) portés par des câbles verticaux tendus (54, 56) s'étendant sur toute la hauteur de la cage (26).

7. Dispositif de mesure de la vitesse selon la revendication 1, dans lequel la mesure de la durée d'interruption At du faisceau infrarouge (16) est effectuée durant une partie de la course où la vitesse de déplacement de la cabine (24) est constante.

8. Dispositif de mesure de la vitesse selon l'une quelconque des revendications précédentes pour une cabine (24) d'ascenseur entraînée à une vitesse constante élevée sur pratiquement tout son trajet et à une vitesse constante faible sur une courte distance avant de s'arrêter à un palier, dans lequel la mesure de la durée d'interruption du faisceau infrarouge (16) est effectuée lorsque la cabine (24) se déplace à ladite vitesse constante faible.
